# NEUE EUROPÄISCHE PATENTSCHRIFT

(11) **EP 3 678 962 B2**
(45) Veröffentlichungstag und Bekanntmachung des Hinweises auf die Entscheidung über den Einspruch: **25.03.2026**
(45) Hinweis auf die Patenterteilung: 10.11.2021
(21) Anmeldenummer: 18768836.1
(22) Anmeldetag: 06.09.2018
(51) Int. Cl.: B65G 21/20

(54) **TRANSPORTVORRICHTUNG MIT GELÄNDER MIT VERSTEIFUNGSSEGMENTEN**
TRANSPORTING APPARATUS HAVING A RAILING WITH REINFORCING SEGMENTS
DISPOSITIF DE TRANSPORT ÉQUIPÉ D'UNE BARRIÈRE COMPORTANT DES SEGMENTS DE RENFORCEMENT

(30) Priorität: 07.09.2017 DE 102017008387
(43) Veröffentlichungstag der Anmeldung: 15.07.2020
(73) Patentinhaber: Heuft Systemtechnik GmbH, 56659 Burgbrohl (DE)
(72) Erfinder: AX, Harald, 56651 Oberzissen (DE); HEUFT, Bernhard, 56659 Burgbrohl (DE)
(74) Vertreter: Abitz & Partner
(86) Internationale Anmeldenummer: PCT/EP2018/074068
(87) Internationale Veröffentlichungsnummer: WO 2019/048578

(56) Entgegenhaltungen:
- EP-A1- 2 821 353
- DE-A1- 2 439 804
- DE-U1- 29 610 201
- DE-U1- 7 631 052
- DE-U1- 8 714 605
- US-A- 4 470 499
- US-A- 6 105 757
- US-B1- 6 296 111

## Beschreibung

Die Erfindung betrifft eine Vorrichtung zum Transportieren von Objekten, vorzugsweise Behältern. Die Vorrichtung weist eine Transporteinrichtung auf, die ausgebildet ist Objekte zu transportieren. Die Vorrichtung weist ferner ein Geländer auf, das ausgebildet ist die auf der Transporteinrichtung transportierten Objekte zu führen. Schließlich weist die Vorrichtung ein Geländer auf mit einem Führungselement zur Führung der Objekte. In konventionellen Transportvorrichtungen mit einem Geländer ist bekannt, für das Geländer ein elastisches Führungselement zu verwenden und das Führungselement mit einem Versteifungsblech zu versehen. Das Versteifungsblech wird mit dem Führungselement verbunden, sodass die Stabilität des Geländers gewährleistet wird. Das Versteifungsblech wird zu diesem Zweck vorgeformt und bei der Endmontage der Transportvorrichtung mit dem Führungselement verbunden. Diese Vorgehensweise führt dazu, dass das Geländer nur schwer angepasst werden kann, falls sich bei der Endmontage herausstellt, dass die Form des Geländers modifiziert werden muss. In diesem Fall muss entweder das Versteifungsblech umgeformt werden oder ein neues Versteifungsblech hergestellt werden.

Aus der US 4,470,499 ist ein Geländer für einen Behältertransporteur mit einer Vielzahl an Geländerhaltern bekannt. Die Geländerhalter umfassen Klemmvorrichtungen, so dass diese leicht vom Bedienpersonal modifiziert werden können. Die US 4,470,499 offenbart eine Vorrichtung zum Transportieren von Objekten nach dem Oberbegriff des Anspruchs 1, sowie ein Verfahren zum Herstellen einer Vorrichtung zum Transportieren von Objekten nach dem Oberbegriff des Anspruchs 9.

Der vorliegenden Erfindung liegt daher die Aufgabe zugrunde, eine Transportvorrichtung mit einem Geländer bereitzustellen, wobei die Form des Geländers einfacher angepasst werden kann.

Hierzu wird eine Vorrichtung gemäß Anspruch 1 zum Transportieren von Objekten, vorzugsweise Behältern vorgeschlagen, die eine Transporteinrichtung aufweist. Das Führungselement ist elastisch ausgebildet, sodass die Form des Geländers während der Endmontage frei gewählt werden kann, bevor das Führungselement dann durch die Versteifungssegmente versteift wird. Das Führungselement ist vorzugsweise als Kunststoffelement ausgebildet, besonders bevorzugt als extrudiertes längliches Kunststoffelement.

Die Verwendung einer Vielzahl von Versteifungssegmenten zur Versteifung des Führungselements des Geländers ermöglicht die einfache Anpassung der Form des Geländers. Bei der Endmontage einer Transportvorrichtung muss die genaue Geländerform nicht im Vorhinein bestimmt werden und ein entsprechendes Versteifungsblech hergestellt werden. Stattdessen kann die konkrete Geländerform vor Ort bestimmt werden und das Führungselement entsprechend geformt werden. Durch die Versteifungssegmente wird das Führungselement anschließend versteift und auf seine abschließende Form festgelegt.

Auch kann die Form des Geländers modifiziert werden falls festgestellt wird, dass das Geländer verändert werden muss, um eine optimale Führung von Objekten zu gewährleisten. Durch die Verwendung der Vielzahl von Versteifungssegmenten können in diesem Fall ein oder mehrere der Versteifungssegmente entfernt oder ausgetauscht werden und dann das Führungselement umgeformt werden. Anschließend kann das Führungselement wieder durch Versteifungssegmente versteift werden und hierdurch die insgesamte Form des Geländers modifiziert werden. Auch ist denkbar, dass die Versteifungssegmente eine nachträgliche Bewegung des Geländers zulassen, sodass die Form des Geländers modifiziert werden kann, ohne dass hierbei die Versteifungssegmente beschädigt werden. Bei der Verwendung eines einzigen Versteifungsprofils wäre dies schwer möglich. Auch kann das Geländer durch die Versteifungssegmente an verschiedene Objekte angepasst werden. Beispielsweise können von der Transporteinrichtung Flaschen mit unterschiedlichen Massen transportiert werden. Flaschen mit einer höheren Masse können durch ein Geländer mit höherer Steifigkeit und höherer Massenträgheit geführt werden, während für Flaschen mit geringerer Masse ein Geländer mit niedrigerer Steifigkeit und niedrigerer Massenträgheit von Vorteil sein kann. Die Steifigkeit und Massenträgheit des Geländers kann durch die Versteifungssegmente eingestellt werden.

Der Begriff Transporteinrichtung, wie er hierin verwendet wird, umfasst jegliche Art von typischerweise beim Transport von den oben angegebenen Objekten verwendeten Transporteuren. Flaschen oder Dosen werden vorzugsweise auf endlosen Gliederkettenförderern oder Transportbändern transportiert, die über Umlenkrollen motorisch angetrieben werden und sowohl geradlinig als auch kurvengängig ausgeführt sein können. Die vorliegende Erfindung ist aber nicht auf die Verwendung von Gliederkettenförderern oder Transportbändern beschränkt.

Da das erfindungsgemäße Führungselement ein C-Profil aufweist, weisen die Versteifungssegmente vorzugsweise ein rechteckiges Querschnittsprofil auf. Somit können die Versteifungssegmente leicht in das im Querschnitt gesehene C-Profil des Führungselements eingeführt oder eingeschoben werden.

Das Führungselement und die Versteifungssegmente können komplementäre Profile aufweisen, sodass das Führungselement formschlüssig mit den Versteifungssegmenten verbunden werden kann. Zusätzlich oder alternativ kann das Führungselement auch stoffschlüssig mit den Versteifungssegmenten verbunden werden.

Die Versteifungssegmente bestehen vorzugsweise aus Metall. Denkbare Metalle sind beispielsweise Aluminium oder Stahl, vorzugsweise Edelstahl. Die Versteifungssegmente können auch aus Gesteinsmaterial oder Keramik bestehen. Hierdurch kann die Stabilität des Geländers gewährleistet werden, sodass dieses im Wesentlichen nicht durch Objekte verformt werden kann, welche von der Transporteinrichtung gegen das Geländer gedrückt werden.

Falls ein elastisches Führungselement ohne die erfindungsgemäßen Versteifungssegmente vorgesehen würde, könnte die Elastizität des Führungselements dazu führen, dass Objekte, die von der Transporteinrichtung gegen das Führungselement gedrückt werden, elastisch von dem Führungselement zurückgestoßen würden, sodass die Objekte zurückfedern könnten und gegebenenfalls umfallen könnten. Durch die Verwendung der Versteifungssegmente und insbesondere bei der Verwendung von metallischen Versteifungssegmenten wird die Massenträgheit des Führungselements erhöht, sodass ein Aufprall zwischen einem Objekt und dem Geländer gedämpft wird. Hierdurch kann ein Umfallen von Objekten verhindert werden.

Darüber hinaus stellt die Verwendung der Versteifungssegmente in Kombination mit dem Führungselement sicher, dass das Geländer dem Druck einer Vielzahl von Objekten standhalten kann, die von der Transporteinrichtung gegen das Geländer gedrückt werden.

Die Transportvorrichtung weist Geländerhalter auf, an denen das elastische Führungselement befestigt werden kann. Ein Geländerhalter ist mit dem elastischen Führungselement vorzugsweise derart verbunden, dass dadurch auch gleichzeitig die zwischen den Geländerhaltern angeordneten Versteifungssegmente in ihrer Position bezüglich des Führungselements gehalten werden.

Auf diese Weise können die Geländerhalter ein seitliches Verrutschen der Versteifungssegmente bezüglich des Führungselements verhindern und somit die Formstabilität des Geländers gewähren.

Der Geländerhalter kann vorzugsweise ausgebildet sein, den räumlichen Verlauf des Geländers zu definieren. Zu diesem Zweck kann der Geländerhalter mit dem elastischen Führungselement verbunden werden, um eine örtliche Fixierung des Führungselements an dieser Stelle zu erreichen. Erfindungsgemäß wird eine Vielzahl von Geländerhaltern vorgesehen, an denen das elastische Führungselement befestigt werden kann. Hierdurch kann eine Fixierung des Führungselements an einer Vielzahl von Stellen ermöglicht werden. Abhängig davon, ob das Geländer einen kurvigen Verlauf einnimmt oder einen relativ geradlinigen Verlauf hat, können mehr oder weniger Geländerhalter vorgesehen werden. Das elastische Führungselement kann auch jeweils über eines der Versteifungselemente mit einem Geländerhalter verbunden werden. Die Geländehalter können fest mit der Transporteinrichtung verbunden sein.

Die Versteifungssegmente weisen vorzugsweise eine Länge von 10 bis 500 mm auf, vorzugsweise haben die Versteifungssegmente eine Länge von 50 mm, 100 mm oder 200 mm. Somit können für verschiedene Anwendungsfälle Versteifungssegmente verschiedener Länge zum Einsatz kommen. Falls das Geländer einen kurvigen Verlauf mit einem geringen Kurvenradius hat, werden Versteifungssegmente mit geringer Länge, beispielsweise von 50 mm, verwendet, um das Führungselement des Geländers zu versteifen. Hat das Geländer andererseits einen relativ geradlinigen Verlauf, können längere Versteifungssegmente, beispielsweise von 200 mm Länge, verwendet werden zur Versteifung des Führungselements des Geländers. Somit kann auf einfache Weise abhängig vom konkreten Einsatzbereich am Ort der Endmontage die Geländerführung eingestellt werden, ohne dass zu diesem Zweck ein vorgeformtes Versteifungsprofil zum Einsatz kommen muss.

Die Versteifungssegmente haben vorzugsweise einen geradlinigen Verlauf. Die Versteifungssegmente können des Weiteren vorgeformt sein und einen kurvenförmigen oder gekrümmten Verlauf aufweisen. Auf diese Weise können verschiedene Geländerformen durch die Verwendung passender Versteifungssegmente realisiert werden. Beispielsweise kann eine Vielzahl von geradlinigen Versteifungssegmenten, Versteifungssegmenten mit einer leichten Krümmung und Versteifungssegmenten mit einer starken Krümmung bereitgestellt werden und bei einer Endmontage des Geländers durch die Verwendung passender Versteifungssegmente eine entsprechende Formgebung des Geländers realisiert werden.

Die Versteifungssegmente können vorzugsweise miteinander verbindbar sein. Hierdurch wird verhindert, dass die Versteifungssegmente bezüglich des Führungselements des Geländers verschoben werden oder verrutschen.

Besonders bevorzugt sind die Versteifungssegmente starr miteinander verbindbar. Hierdurch kann gewährleistet werden, dass der Verlauf des Führungselements des Geländers auf einfache Weise modifiziert werden kann. Gleichzeitig kann, nach der Festlegung des Verlaufs des Geländers, eine starre Verbindung der Versteifungssegmente vorgenommen werden und hierdurch eine hohe Formstabilität des Geländers erzielt werden. Die Verbindung der Versteifungssegmente miteinander kann auf jede dem Fachmann geläufige Weise durchgeführt werden.

Die Erfindung betrifft ferner ein Verfahren gemäß Anspruch 6 zum Herstellen einer Vorrichtung zum Transportieren von Objekten, vorzugsweise Behältern.

Ein Hauptvorteil des erfindungsgemäßen Verfahrens liegt darin, dass der genaue Verlauf des Geländers erst bei der Montage der Transportvorrichtung festgelegt werden muss. Dazu wird zunächst das elastische Führungselement an einem oder mehreren Geländerhaltern befestigt. Die genaue Position der Geländerhalter ergibt sich dabei oft erst während der Montage, so dass bei konventionellen Geländersystemen erst zu diesem Zeitpunkt mit der passgenauen Fertigung der Geländerteile beonnen werden konnte. Bei dem erfindungsgemäßen Verfahren kann dagegen das elastische Führungselement an jeden gewünschten Geländerverlauf angepasst werden.

Vorzugsweise sind die Versteifungssegmente miteinander verbindbar ausgebildet, so dass die Versteifungssegmente, nachdem mit ihnen das elastische Führungselement versteift worden ist, starr miteinander verbunden werden können. Auf diese Weise kann man ein Führungsgeländer erhalten, dass genauso stabil ist wie herkömmliche Führungsgeländer, aber gleichzeitig bei der Errichtung der Transporteinrichtung deutlich flexibler einsetzbar ist

Die Erfindung wird im Folgenden unter Bezugnahme auf die beiliegenden Zeichnungen näher beschrieben. Hierbei zeigt:
- Figur 1: eine illustrative Darstellung der erfindungsgemäßen Transportvorrichtung mit einem kurvigen Verlauf,
- Figur 2: eine illustrative Darstellung der erfindungsgemäßen Transportvorrichtung mit geradlinigem Verlauf und Versteifungssegmenten,
- Figur 3: eine illustrative Darstellung der erfindungsgemäßen Transportvorrichtung mit geradlinigem Verlauf und einer verringerten Anzahl an Versteifungssegmenten, die nicht Teil der Erfindung ist,
- Figur 4: ein Querschnittsprofil eines erfindungsgemäßen Geländers mit einem Führungselement und einem Versteifungssegment, und
- Figur 5: eine Ausführungsform des Führungselements und der Versteifungssegmente des Geländers mit einem unterschiedlichen Querschnitt, die nicht Teil der Erfindung ist.

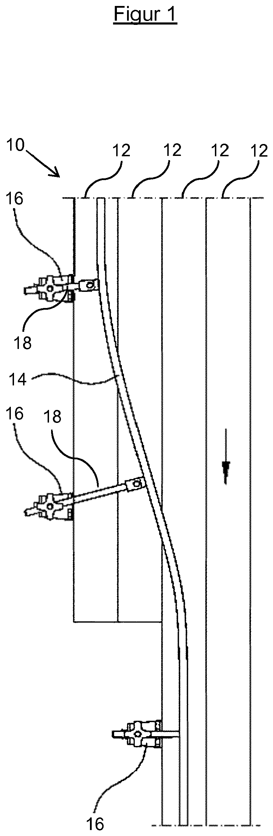

Figur 1 zeigt eine Vorrichtung zum Transportieren von Objekten. Die Vorrichtung weist eine Transporteinrichtung 10 auf. Die Transporteinrichtung 10 ist ausgebildet, Objekte zu transportieren. Zu diesem Zweck weist die Transporteinrichtung 10 eine Vielzahl von Transportbändern 12 auf. Objekte, wie zum Beispiel Glasflaschen, werden auf den Transportbändern 12 in Richtung des in Figur 1 gezeigten Pfeil transportiert.

In dem in Figur 1 gezeigten Fall sind vier Transportbänder 12 gezeigt, wobei auf diesen Transportbändern 12 transportierte Objekte auf einen engeren Verlauf der Transportbänder 12 geführt werden sollen. Die Anzahl der Transportbänder 12 soll von vier auf zwei reduziert werden. Zu diesem Zweck weist die Vorrichtung ein Geländer 14 auf. Das Geländer 14 ist oberhalb der Transportebene der Transportbänder 12 angeordnet und führt Objekte, die auf den Transportbändern 12 transportiert werden, entlang einer Bahn, die zu einer Verengung des Behälterstroms führt. Zu diesem Zweck weist das Geländer 14 eine kurvenförmige Form auf.

Um die kurvenförmige Formgebung des Geländers 14 zu realisieren sind Geländerhalter 16 vorgesehen, die mittels Verbindungsachsen 18 mit dem Geländer 14 verbunden sind.

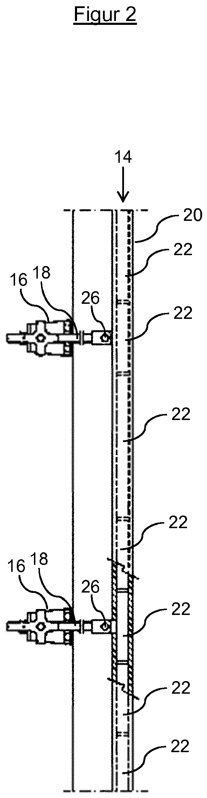

Figur 2 zeigt die erfindungsgemäße Transportvorrichtung mit geradlinigem Verlauf. Um ein einfach zu installierendes und zu modifizierendes Geländer 14 bereitzustellen, weist das Geländer 14 ein Führungselement 20 auf. Zur Versteifung des Führungselements 20 ist eine Vielzahl von Versteifungssegmenten 22 vorgesehen. Die Vielzahl von Versteifungssegmenten 22 ist einem einzelnen langen Führungselement 20 zugeordnet und sorgt für eine Versteifung des Führungselements 20. Das Geländer 14 wird durch die Versteifung beim Auflaufen von vielen Objekten vor einer ungewollten Deformation geschützt. Außerdem sorgen die Versteifungssegmente 22 dafür, dass Objekte, welche gegen das Geländer 14 gedrückt werden, nicht umfallen. Zu diesem Zweck erhöhen die Versteifungssegmente 22 durch ihr Eigengewicht die Massenträgheit des Geländers 14.

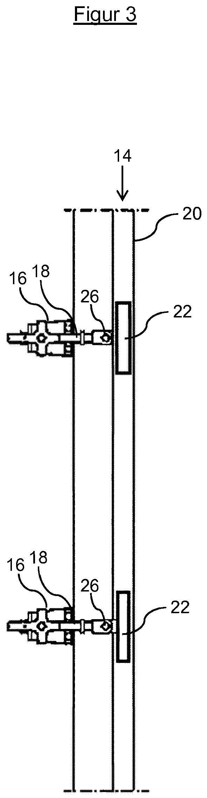

In dem in Figur 2 gezeigten Fall sind die Versteifungssegmente 22 direkt aneinander angrenzend in dem Führungselement 20 angeordnet. Die Versteifungssegmente 22 füllen somit das Führungselement 20 aus. Alternativ können auch nur vereinzelte Versteifungssegmente 22 in dem Führungselement 20 vorgesehen sein. Dieser Fall ist in Figur 3 dargestellt. Abhängig von der gewünschten Charakteristik des Geländers 14, insbesondere der gewünschten Steifigkeit und Massenträgheit des Geländers 14, kann die Anzahl der Versteifungssegmente 22 gewählt werden.

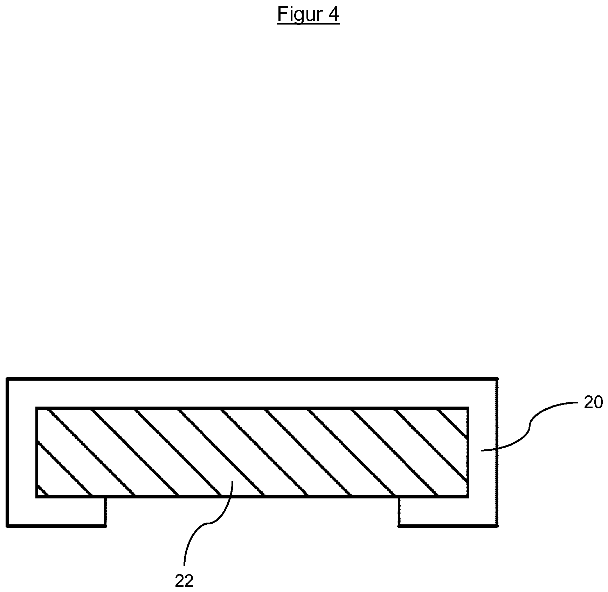

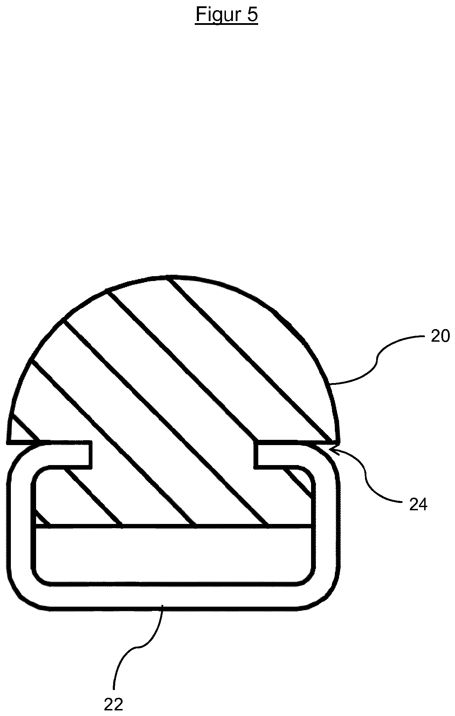

Das Führungselement 20 sowie die Versteifungssegmente 22 können verschiedene Querschnittsprofile aufweisen. Zwei beispielhafte Querschnittsprofile sind in den Figuren 4 und 5 gezeigt. In Figur 4 ist eine Ausführungsform gezeigt, in der das Führungselement 20 im Querschnitt ein C-Profil aufweist. Die Versteifungssegmente 22 weisen ein rechteckiges Querschnittsprofil auf und werden von dem Führungselement 20 umschlossen. Bei der Installation des Geländers können die Versteifungssegmente 22 in das Führungselement 20 geschoben werden.

Figur 5 zeigt eine nicht-erfindungsgemäße Ausführungsform, in der die Versteifungssegmente 22 im Querschnitt ein C-Profil aufweisen. Das Führungselement 20 weist Nuten 24 auf, in die die Versteifungssegmente eingeführt werden können. In den in den Figuren 4 und 5 gezeigten Ausführungsformen wird somit ein Formschluss zwischen dem Führungselement 20 und den Versteifungssegmenten 22 erreicht.

Um ein Verrutschen der Versteifungssegmente 22 bezüglich des Führungselements 20 zu verhindern, können die Geländerhalter 16 zum Beispiel dadurch an dem Führungselement befestigt werden, dass diese an Verbindungspunkten 26 fest mit einzelnen Versteifungssegmenten 22 verbunden sind. Diese feste Verbindung der Geländerhalter 16 mit den Versteifungssegmenten 22 ist schematisch in Figur 2 dargestellt. Die feste Verbindung der Geländerhalter 16 mit einzelnen Versteifungssegmenten 22 legt darüber hinaus die Formgebung des Geländers fest. Zu diesem Zweck sind die Geländerhalter 16 an den den Verbindungspunkten 26 gegenüberliegenden Enden fest montiert, beispielsweise an der Transporteinrichtung 10.

Alternativ oder zusätzlich können Versteifungssegmente 22 fest verbindbar mit dem Führungselement 20 ausgebildet sein. Einzelne oder alle Versteifungssegmente 22 können in diesem Fall fest mit dem Führungselement 20 verbunden werden, wodurch ein Verrutschen der Versteifungssegmente 22 bezüglich des Führungselements 20 verhindert wird. Vorzugsweise sind sowohl Geländerhalter 16 an Verbindungspunkten 26 fest mit einzelnen Versteifungssegmenten 22 verbindbar und Versteifungssegmente 22 fest mit dem Führungselement 20 verbindbar.

## Patentansprüche

1. Vorrichtung zum Transportieren von Objekten, vorzugsweise Behältern, wobei die Vorrichtung Folgendes aufweist:
- eine Transporteinrichtung (10), die ausgebildet ist Objekte zu transportieren, und
- ein Geländer (14), das ausgebildet ist die auf der Transporteinrichtung (10) transportierten Objekte zu führen,
wobei das Geländer (14) eine Vielzahl von Geländerhaltern (16) und ein an den Geländerhaltern (16) befestigtes, elastisches Führungselement (20) aufweist, das zur Führung der Objekte ausgebildet ist und sich über die gesamte Länge der Transporteinrichtung (10) erstreckt, und wobei das Geländer (14) eine Vielzahl von voneinander beabstandeten Versteifungssegmenten (22) aufweist,
**dadurch gekennzeichnet, dass** die Versteifungssegmenten zwischen den Geländerhaltern (16) und angrenzend an das Führungselement (20) angeordnet sind und ausgebildet sind, das elastische Führungselement (20) zu versteifen,
wobei das Führungselement im Querschnitt ein C-Profil aufweist und wobei die Versteifungssegmente (22) so konfiguriert sind, dass sie in das Führungselement (20) eingeführt werden können, so dass das Führungselement (20) die Versteifungssegmente (22) umschliesst.

2. Vorrichtung nach Anspruch 1, wobei die Versteifungssegmente (22) aus Metall sind, vorzugsweise aus Aluminium oder Stahl.

3. Vorrichtung nach einem der vorherigen Ansprüche, wobei das elastische Führungselement (20) aus Kunststoff, vorzugsweise aus einem extrudierten Kunststoff, besteht.

4. Vorrichtung nach Anspruch 3, wobei die Geländerhalter (16) ausgebildet sind, den räumlichen Verlauf des Geländers (14) zu definieren.

5. Vorrichtung nach einem der vorherigen Ansprüche, wobei die Versteifungssegmente (22) eine Länge von 10 bis 500 mm, vorzugsweise 50 mm oder 100 mm oder 200 mm, aufweisen.

6. Verfahren zum Herstellen einer Vorrichtung zum Transportieren von Objekten, vorzugsweise Behältern, wobei das Verfahren die folgenden Verfahrensschritte umfasst:
- Bereitstellen einer Transporteinrichtung (10), die ausgebildet ist Objekte zu transportieren, und
- Bereitstellen eines Geländers (14), das ausgebildet ist die auf der Transporteinrichtung (10) transportierten Objekte zu führen,
- Bereitstellung von einer Vielzahl von Geländerhaltern (16), wobei das Geländer (14) ein an den Geländerhaltern (16) befestigtes, elastisches Führungselement (20) aufweist, das zur Führung der Objekte ausgebildet ist und sich über die gesamte Länge der Transporteinrichtung (10) erstreckt, und wobei das Geländer (14) eine Vielzahl von nicht miteinander verbundenen Versteifungssegmenten (22) aufweist, die angrenzend an das Führungselement (20) angeordnet werden und ausgebildet sind, das elastische Führungselement (20) zu versteifen,
**dadurch gekennzeichnet, dass**
das elastische Führungselement (20) in den Bereichen zwischen den Geländerhaltern (16) mittels der Vielzahl an Versteifungselementen (22) versteift wird,
wobei das Führungselement im Querschnitt ein C-Profil aufweist und wobei die Versteifungssegmente (22) in das Führungselement (20) eingeführt werden können, so dass das Führungselement (20) die Versteifungssegmente (22) umschliesst.

7. Verfahren nach Anspruch 6, wobei der genaue Verlauf des Geländers (14) erst bei der Montage der Transportvorrichtung (10) festgelegt wird.

8. Verfahren nach einem der Ansprüche 6 bis 7, wobei die die Versteifungssegmente (22) miteinander verbindbar ausgebildet sind und wobei die Versteifungssegmente (22), nachdem mit ihnen das elastische Führungselement (20) versteift worden ist, starr miteinander verbunden werden.

## Claims

1. An apparatus for transporting objects, preferably containers, the apparatus comprising:
- a transport device (10) which is designed to transport objects, and
- a railing (14) which is designed to guide the objects transported on the transport device (10),
wherein the railing (14) has a plurality of railing holders (16) and an elastic guide element (20) fastened to the railing holders (16), which is designed to guide the objects and extends over the entire length of the transport device (10), and wherein the railing (14) has a plurality of spaced-apart stiffening segments (22), **characterised in that** the stiffening segments are disposed between the railing holders (16) and adjacent to the guide element (20) and are adapted to stiffen the elastic guide element (20),
wherein the guide element has a C-profile in cross-section, and wherein the stiffening segments (22) are configured for insertion into the guide element (20) so that the guide element (20) surrounds the stiffening segments (22).

2. Apparatus according to claim 1, wherein the stiffening segments (22) are made of metal, preferably aluminium or steel.

3. Apparatus according to any one of the preceding claims, wherein the elastic guide element (20) consists of plastic, preferably of an extruded plastic.

4. Apparatus according to claim 3, wherein the railing holders (16) are designed to define the spatial course of the railing (14).

5. Apparatus according to any one of the preceding claims, wherein the stiffening segments (22) have a length of 10 to 500 mm, preferably 50 mm or 100 mm or 200 mm.

6. A method of manufacturing an apparatus for transporting objects, preferably containers, the method comprising the following steps:
- providing a transport device (10) adapted to transport objects, and
- providing a railing (14) adapted to guide the objects transported on the transport device (10),
- providing a plurality of railing holders (16), said railing (14) comprising an elastic guide element (20) fastened to said railing holders (16), said elastic guide element (20) being adapted to guide said objects and extending along the entire length of said transport device (10), and said railing (14) comprising a plurality of non-interconnected stiffening segments (22) which are arranged adjacent to the guide element (20) and which are designed to stiffen the elastic guide element (20), **characterized in that** the elastic guide element (20) is stiffened in the regions between the railing holders (16) by means of the plurality of stiffening segments (22),
wherein the guide element has a C-profile in cross-section, and wherein the stiffening segments (22) can be inserted into the guide element (20) so that the guide element (20) surrounds the stiffening segments (22).

7. Method according to claim 6, wherein the exact course of the railing (14) is only determined during the assembly of the transport device (10).

8. Method according to any one of claims 6 to 7, wherein the stiffening segments (22) are designed to be connectable to one another and wherein the stiffening segments (22), after the elastic guide element (20) has been stiffened with them, are rigidly connected to one another.

## Revendications

1. Appareil pour transporter des objets, de préférence des contenants, l'appareil ayant les éléments suivants :
- un dispositif de transport (10) qui est conçu pour transporter des objets, et
- un rail (14) qui est conçu pour guider les objets transportés sur le dispositif de transport (10),
dans lequel le rail (14) a une pluralité de supports de rail (16) et un élément de guidage élastique (20) fixé aux supports de rail (16) qui est conçu pour guider les objets et s'étend sur la totalité de la longueur du dispositif de transport (10), et dans lequel le rail (14) a une pluralité de segments de renforcement (22) espacés les uns des autres,
**caractérisé en ce que** les segments de renforcement sont agencés entre les supports de rail (16) et de manière adjacente à l'élément de guidage (20) et sont conçus pour renforcer l'élément de guidage élastique (20),
dans lequel l'élément de guidage a un profil en C en coupe transversale, et dans lequel les segments de renforcement (22) sont conçus de manière à pouvoir être introduits dans l'élément de guidage (20) de telle sorte que l'élément de guidage (20) enferme les segments de renforcement (22).

2. Appareil selon la revendication 1, dans lequel les segments de renforcement (22) sont fabriqués en métal, de préférence en aluminium ou en acier.

3. Appareil selon l'une des revendications précédentes, dans lequel l'élément de guidage élastique (20) consiste en une matière plastique, de préférence en une matière plastique extrudée.

4. Appareil selon la revendication 3, dans lequel les supports de rail (16) sont conçus pour définir le trajet spatial du rail (14).

5. Appareil selon l'une des revendications précédentes, dans lequel les segments de renforcement (22) ont une longueur allant de 10 à 500 mm, de préférence 50 mm ou 100 mm ou 200 mm.

6. Procédé permettant de produire un appareil pour transporter des objets, de préférence des contenants, le procédé comprenant les étapes de procédé suivantes :
- la fourniture d'un dispositif de transport (10) qui est conçu pour transporter des objets, et
- la fourniture d'un rail (14) qui est conçu pour guider les objets transportés sur le dispositif de transport (10),
- la fourniture d'une pluralité de supports de rail (16), dans lequel le rail (14) a un élément de guidage élastique (20) fixé aux supports de rail (16) qui est conçu pour guider les objets et s'étend sur la totalité de la longueur du dispositif de transport (10), et dans lequel le rail (14) a une pluralité de segments de renforcement (22) non raccordés les uns aux autres, qui sont agencés de manière adjacente à l'élément de guidage (20) et sont conçus pour renforcer l'élément de guidage élastique (20),
**caractérisé en ce que**
l'élément de guidage élastique (20) est renforcé dans les zones entre les supports de rail (16) au moyen de la pluralité d'éléments de renforcement (22),
dans lequel l'élément de guidage a un profil en C en coupe transversale, et dans lequel les segments de renforcement (22) peuvent être introduits dans l'élément de guidage (20) de telle sorte que l'élément de guidage (20) enferme les segments de renforcement (22).

7. Procédé selon la revendication 6, dans lequel le trajet précis du rail (14) n'est déterminé que lors de l'assemblage de l'appareil de transport (10).

8. Procédé selon l'une des revendications 6 à 7, dans lequel les segments de renforcement (22) sont conçus pour être raccordables les uns aux autres, et dans lequel les segments de renforcement (22), une fois que l'élément de guidage élastique (20) a été renforcé avec eux, sont raccordés de manière rigide les uns aux autres.
